# EUROPÄISCHE PATENTANMELDUNG

(11) **EP 4 512 236 A1**
(43) Veröffentlichungstag der Anmeldung: **26.02.2025**
(21) Anmeldenummer: 24195057.5
(22) Anmeldetag: 16.08.2024
(51) Int. Cl.: A01G 31/02, A01G 31/04, A01G 31/06

(54) **PFLANZEINHEIT**

(30) Priorität: 25.08.2023 CH 9062023
(71) Anmelder: MABEWO Greentocube AG, 6403 Küssnacht am Rigi (CH)
(72) Erfinder: GRAESS, Harald, 6403 Küssnacht am Rigi (CH)

(57) **Zusammenfassung**

Die Erfindung betrifft eine Pflanzeinheit, insbesondere geeignet für einen gewerblichen Einsatz. Zur Verfügung gestellt werden soll eine Anlage, die einen automatisierten Betrieb und eine hohe Anbaudichte ermöglicht. Hierzu umfasst die Pflanzeinheit mindestens eine Wachstumseinheit (1) zur Aufzucht von Pflanzen bzw. Pflanzgut und mindestens eine, mit der Wachstumseinheit (1) verbindbare, Handlingeinheit (2) zur Aufnahme der Infrastruktur zum Betrieb der Pflanzeinheit.

## Beschreibung

Die Erfindung betrifft eine Pflanzeinheit, insbesondere geeignet für einen gewerblichen Einsatz.

Klimawandel und Zunahme der Weltbevölkerung stellen die Energie-,Trink- und Brauchwasserversorgung insbesondere in armen Ländern und Regionen mit schwacher Infrastruktur vor immer grössere Herausforderungen, die mit konventionellen Technologien aufgrund des Investitionsbedarfs und der Umweltfolgen kaum zu bewältigen sind.

Anlagen zur Klimatisierung und Flüssigkeitsaufbereitung für einen dezentralen Einsatz sind bekannt. So offenbart die DE 102017122533 A1 eine derartige Anlage, die autark und kompakt ist. Sie umfasst mindestens eine Verdampferkammer für Rohwasser bzw. Abwasser, Kondensationskammern für das bei der Verdampfung entstehende Gas, einen Kältespeicher und eine Energiewandlungseinheit. Das Gas wird vor der Kondensationskammer durch einen Wärmetauscher geführt. In der Verdampferkammer gebildetes Eis wird für Kühlungszwecke gespeichert. Erreicht werden soll eine Trinkwassererzeugung für ein Gebäude und eine Klimatisierung des Gebäudes mit geringer Energiezufuhr von aussen. Der Geräte- und Installationsaufwand ist vergleichsweise hoch.

In der DE 102016014435 A1 ist ein Aufsatzmodul für einen stellbaren Trinkwassertank offenbart, wobei der Trinkwassertank mit einer Wasseraufbereitungsanlage gekoppelt ist. Zu dessen Energieversorgung sind Solarpaneele vorgesehen, die den Trinkwassertank umhüllen und auch auf dem Aufsatzmodul vorgesehen sind. Zugleich ist das Aufsatzmodul als Regenwasserauffangschirm ausgebildet, von dem aufgefangenes Regenwasser in den Trinkwassertank geleitet wird.

In der DE 102004015728 A1 ist eine Vorrichtung zur autarken Wassergewinnung aus der Luftfeuchtigkeit gezeigt, die einfach aufgebaut ist. Ohne elektrische Hilfsmittel soll es möglich sein, ca. 1l Wasser je Quadratmeter Anlagenfläche (Folien) aus der Luft abzuscheiden. Hierzu wird Umgebungsluft am Tag durch Erwärmung der Vorrichtung angesaugt und ein an einem, nachts ausgekühlten Kondensator unterhalb des Taupunkts gekühlt. Der gekühlte Luftstrom wird je nach Temperatur gedrosselt und nach Ablauf des Kondensationsprozesses mittels Gegenstrom mit der zugeführten Luft erwärmt.

Eine weitere derartige Vorrichtung ist in der DE 102017109658 A1 offenbart. Hierbei umfasst ein Kondensator zur Luftentfeuchtung wenigstens einen elektrisch angetriebenen Rotor in einem, an den Stirnflächen offenen, rohrförmigen Gehäuse, dessen Rotorblätter aus offenporigem Metallschaum bestehen. Zur aktiven Kühlung enthält der Kondensator mehrere Kühlelemente, zum Beispiel Peltierelemente, die mit den Rotorblättern verbunden sind. Im Betrieb werden die drehenden Rotorblätter auf eine Temperatur von 3-5 Grad unterhalb der Umgebungstemperatur gekühlt. Die in der strömenden Luft enthaltene Feuchtigkeit kondensiert an den gekühlten Rotorblättern, wobei der offenporige Metallschaum eine relativ grosse Kontaktfläche ermöglicht. Das kondensierte Wasser wird an die innere Gehäusewand geschleudert und läuft in einen Wasserauffangbehälter.

Die vorbeschriebenen Lösungen sind nur für Einzelanwendungen bzw. einzelne Haushalte geeignet.

Darüber hinaus ist in der WO 2021028731 A1 eine Anlage zur Gewinnung von Energie, Nahrungs- und Futtermitteln und/oder Wasser bei gewerblichem Einsatz offenbart, die mindestens ein Modul, welches zwei Strukturelemente in Form von Halbmodulen und ein, die Strukturelemente verbindendes Element umfasst. Hierbei weist ein Strukturelement einen Boden, ein Wandsegment und ein Deckensegment mit einem Bogendach auf, wobei Wandsegment und Deckensegment unabhängig voneinander handhabbar sind, wobei unter dem Bogendach Standardcontainer angeordnet sind.

Das Bogendach ist zur Anordnung von Photovoltaikmodulen und/oder mindestens einer Vorrichtung zur Entfeuchtung von Umgebungsluft geeignet.

Die Aufgabe der Erfindung besteht deshalb darin, eine Pflanzeinheit für den insbesondere gewerblichen Einsatz zu entwickeln, die einen automatisierten Betrieb und eine hohe Anbaudichte ermöglicht.

Die Aufgabe ist mit den kennzeichnenden Merkmalen des Patentanspruchs 1 gelöst.

Eine erfindungsgemässe Pflanzeinheit umfasst zumindest eine Wachstumseinheit zur Aufzucht von Pflanzen bzw. Pflanzgut und mindestens eine, mit der Wachstumseinheit verbindbare, Handlingeinheit zur Aufnahme der Infrastruktur zum Betrieb der Pflanzeinheit.

Bevorzugte Ausgestaltungen der erfindungsgemässen Pflanzeinheit sind in den abhängigen Ansprüchen offenbart.

Die Wachstumseinheit und die Handlingeinheit weisen vorteilhaft je eine Öffnung in Form eines Ausschnitts an einer Kopplungsstelle auf.

Eine erfindungsgemässe Wachstumseinheit der Pflanzeinheit umfasst bevorzugt zwei Wachstumseinheiten, die besonders bevorzugt in Form von Standardcontainern übereinander oder nacheinander angeordnet sind, wobei ein zentraler Ausschnitt an einer Kopplungsstelle zwischen Decke und Boden vorgesehen ist.

Die Verwendung von Containern ermöglicht einen isolierten Anbau von Pflanzen, auch unter ansonsten ungeeigneten klimatischen Bedingungen. Anstelle von Containern sind auch andere, übliche bauliche Hüllen der Pflanzeinheit möglich, zum Beispiel in Form von Hallen.

Alle unteren Standardcontainer sind durch Ausschnitte oberhalb ihrer Böden miteinander verbunden.

Die Handlingeinheit ist der mindestens einen Wachstumseinheit vorangestellt und ist bevorzugt aus zwei Standardcontainern für das Handling und die Pflege des Pflanzguts und für die zum Unterhalt der Pflanzeinheit erforderliche Technik gebildet.

In der Handlingeinheit sind die zur Vorbereitung, Anzucht, Ernte und Verarbeitung der aufzuziehenden Pflanzen notwendigen Teilsysteme enthalten und von daher ist die Handlingeinheit der Wachstumseinheit vorangestellt. Über den vorbeschriebenen Ausschnitt werden Trägerschlitten mit Pflanzschalen der Wachstumseinheit zugeführt oder aus dieser entnommen.

Durch die Wachstumseinheit ist dazu bodennah ein Pflanzenlift geführt (bei mehreren Wachstumseinheiten mittig), der sich über die gesamte Höhe der Wachstumseinheit und der Handlingeinheit erstreckt. Auf beiden Seiten des Pflanzenlifts erstrecken sich Laufschienen mit einem Raster mit variablen Abständen, die zudem jeweils mit Leuchtmitteln zur Beleuchtung der Pflanzen versehen sind. Durch das variable Raster (Abstand) kann flexibel auf wechselnde Anforderungen und unterschiedliche Pflanzen umgerüstet werden.

Und in die Laufschienen sind Trägerschlitten für bevorzugt mehrere Pflanzbehälter einsetzbar, zum Beispiel bis zu acht Trägerschlitten mit jeweils mehreren Pflanzbehältern. Die Trägerschlitten können vom Pflanzenlift in die Laufschienen in der Wachstumseinheit eingeführt und aus diesen entnommen werden.

Jeder Trägerschlitten und Pflanzbehälter kann zudem mit spezifischen Merkmalen in Abhängigkeit von den anzubauenden Pflanzen ausgestattet sein.

Der Pflanzenlift weist auch Mittel zur, bevorzugt zentralen und gleichzeitigen, Bewässerung aller Pflanzbehälter auf, insbesondere zur Bewässerung während des Transports der Pflanzbehälter. Eine zentrale Bewässerung im Pflanzenlift ist einfach zu warten und weniger komplex und störanfällig, als wenn das Wasser wie beim bisherigen Stand der Technik durch die gesamte Wachstumseinheit zu führen wäre.

Im unteren Bereich des Pflanzenlifts ist eine Fördereinheit, bevorzugt ein Förderband zum Transport der Trägerschlitten in der Wachstumseinheit und in der Handlingeinheit angeordnet.

Bevorzugt ist der Betrieb der Pflanzeinheit automatisiert und von aussen steuerbar.

Durch die Verwendung von Standard-Frachtcontainern ist die Pflanzeinheit zum Aufbau eines modularen Systems geeignet, wobei die mindestens eine Handlingeinheit der mindestens einen Wachstumseinheit vorangestellt ist.

Die erfindungsgemässe Pflanzeinheit ermöglicht eine sehr hohe Anbaudichte von Pflanzen und erfordert bei normalem Betrieb keinen Zutritt von Bedienpersonal, so dass zudem nur eine geringe Wahrscheinlichkeit für eine Kontamination mit Schädlingen und Krankheitserregern besteht.

Aufgrund der hohen Anbaudichte können Ressourcen und Infrastruktur besonders effizient genutzt werden, Prozesse können in geschlossenen Kreisläufen betrieben werden, eine Kontrolle und Einflussnahme auf interne Umgebungsbedingungen ist einfach.

Die Erfindung wird nachfolgend in einem Ausführungsbeispiel anhand einer Zeichnung näher beschrieben. In der Zeichnung zeigen die
- Fig. 1:: eine erfindungsgemässe Pflanzeinheit,
- Fig. 2:: die Pflanzeinheit nach Fig. 1 in anderer Darstellung;
- Fig. 3:: die Pflanzeinheit nach Fig. 1 in einer weiteren Darstellung;
- Fig. 4:: eine Steuereinheit des erfindungsgemässen Pflanzcontainers.

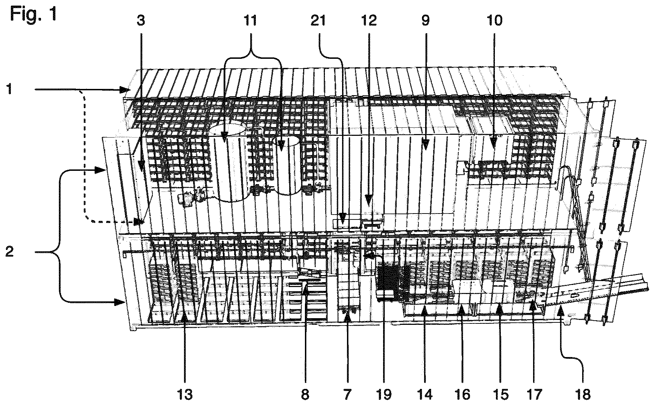

Eine erfindungsgemässe Pflanzeinheit ist in der Fig. 1 in einer Ausführungsform dargestellt. Sie weist im Beispiel zwei übereinander angeordnete Wachstumseinheiten 1 für Pflanzen und zwei zugeordnete und ebenfalls übereinander angeordnete Handlingeinheiten 2 auf.

Die Wachstumseinheiten 1 und die Handlingeinheiten 2 sind aus Standard-Seefrachtcontainern gebildet.

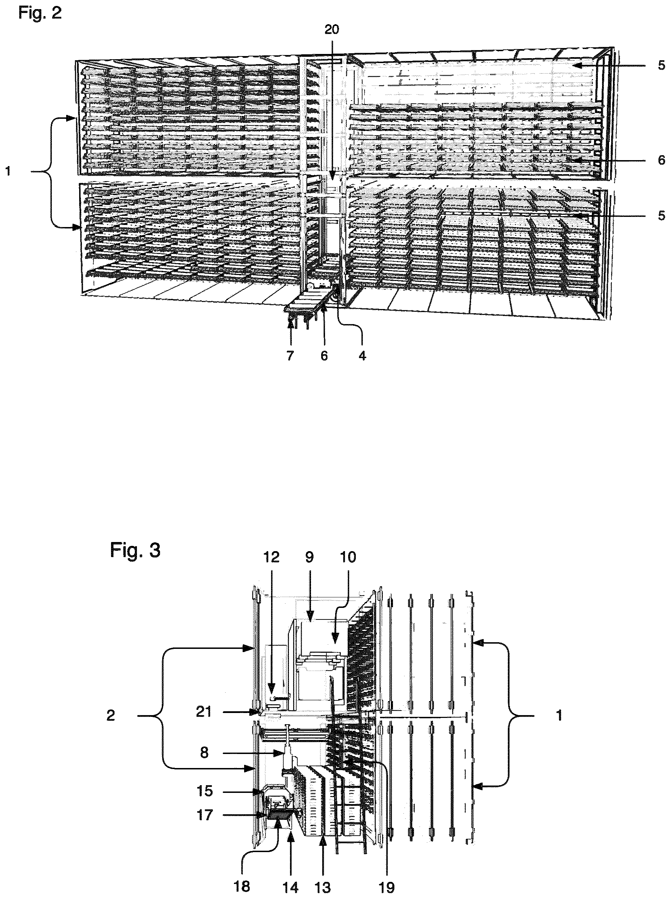

Jede Wachstumseinheit 1 ist mit, in einem Raster angeordneten Laufschienen 5 versehen, wobei die Laufschienen 5 auch eine Beleuchtung für die Pflanzen aufweisen. Auf den Laufschienen 5 sind wiederum Trägerschlitten 6 mit, im Beispiel, jeweils mehreren Pflanzbehältern angeordnet (Fig. 2).

Beide Wachstumseinheiten 1 sind durch eine Öffnung, einen Ausschnitt 19 (Fig. ) in jeder Wachstumseinheit 1 miteinander verbunden.

Der Ausschnitt 19 erstreckt sich weiterhin kaminartig über beide Wachstumseinheiten 1 und nimmt einen darin geführten Pflanzenlift 4 mit einem Bewässerungssystem, die Trägerschlitten 6 und ein Förderband 7 auf. Die Trägerschlitten 6 sind geeignet, auf den Laufschienen 5 Pflanzbehälter zu transportieren.

Die untere Handlingeinheit 2 enthält gestapelte Pflanzbehälter 13, die zur Verwendung in den Wachstumseinheiten 1 bereitstehen. Sie enthält weiterhin eine Erntestrecke 14 mit einem Förderband zum Transport von Pflanzbehältern, eine Einrichtung zur Reinigung 15 und zur Desinfektion 16 von Pflanzbehältern, einen Auswurfmechanismus 17 für Pflanzbehälter, einen teleskopierbaren Kranarm 8 mit einem Greifer und ein Förderband 18 zum Austrag von Erntegut und abgeernteten Pflanzen aus der Handlingeinheit 2.

Die obere Handlingeinheit 2 enthält eine Technikeinheit 3 zur Stromversorgung und HVAC, einen Wassertank 11 für eine Keimstation 9, eine Einrichtung zur Saatgutabgabe 12 an die Keimstation 9 und Grossbehälter 10 der Keimstation 9.

Beide Handlingeinheiten 2 sind durch eine Öffnung, einen Ausschnitt 20 (Fig. 2) in jeder Handlingeinheit 2 miteinander verbunden.

Die Wachstums- und Handlingeinheiten 1, 2 sind zudem durch eine Öffnung, einen Ausschnitt 21 (Fig. 1, 3) miteinander verbunden. Das Förderband 7 erstreckt sich vom Ausschnitt 19 in den Ausschnitt 21.

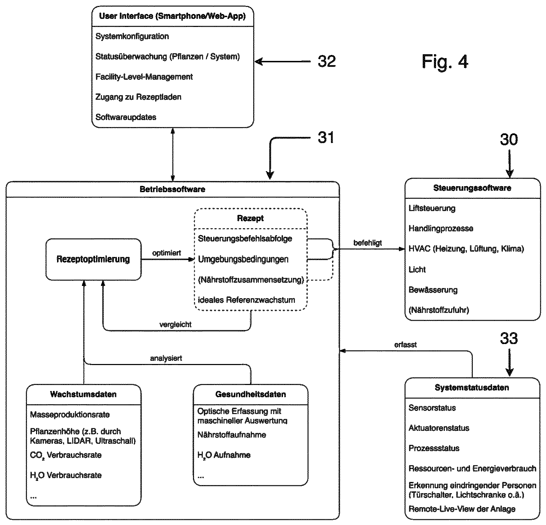

Die Technikeinheit 3 weist zudem eine Steuereinheit (Fig.4) auf, die Steuerungssoftware 30 für Steuerungsvorgänge der betrieblicher Abläufe der Pflanzeinheit und übergeordnete Betriebssoftware 31 zur Erfassung und Verarbeitung von Daten, insbesondere zur Steuerung von Wachstums- und Gesundheitsdaten der Pflanzen sowie Wachstumsrezepte und deren Optimierung aufweist. Die Betriebssoftware 31 erfasst zudem Systemstatusdaten 33 der Pflanzeinheit, analysiert Wachstums- und Gesundheitsdaten der Pflanzen und optimiert vorhandene Rezepte des Pflanzenwachstums.

Weiterhin verfügt die Steuereinheit über ein User Interfache 32 (App für Smartphone, PC/Cloud), um die Pflanzeinheit von aussen bedienen und überwachen zu können.

Im Betrieb der Pflanzeinheit wird zunächst Saatgut, zum Beispiel Gerstenkörner, in der Keimstation 9 der oberen Handlingeinheit 2 in vorbereiteten Pflanzbehältern zum Keimen gebracht und anschliessend mittels des Pflanzenlifts 4 auf den Trägerschlitten 6 auf den Laufschienen 5 in die Wachstumseinheiten 1 zur weiteren Aufzucht überführt.

Bei Erreichen der Erntereife werden die reifen Gerstenpflanzen zur Erntestrecke 14 der unteren Handlingeinheit 2 überführt und die reifen Gerstenkörner werden von den Pflanzen getrennt. Die Pflanzbehälter werden entleert, geeinigt, desinfiziert und bis zu einer erneuten Nutzung im Lager 13 gelagert. Gerstenkörner und Pflanzenreste sowie die gebrauchtes Substrat werden mittels Kranarm 8 und Auswurfmechanismus 17 über das Förderband 18 ausgetragen.

Über das Förderband 18 werden bei Bedarf neues Substrat und neues Saatgut eingetragen.

### Aufstellung der verwendeten Bezugszeichen

- 1: Wachstumseinheit
- 2: Handlingeinheit
- 3: Technikeinheit
- 4: Pflanzenlift
- 5: Laufschienen
- 6: Trägerschlitten
- 7: Förderband
- 8: Kranarm
- 9: Keimstation
- 10: Grossbehälter
- 11: Wassertank
- 12: Saatgutabgabe
- 13: Lager für Pflanzbehälter
- 14: Erntestrecke
- 15: Reinigung
- 16: Desinfektion
- 17: Auswurfmechanismus
- 18: Förderband
- 19: Ausschnitt
- 20: Ausschnitt
- 21: Ausschnitt
- 30: Steuerungssoftware
- 31: Betriebssoftware
- 32: User Interface
- 33: Systemstatusdaten

## Patentansprüche

1. Pflanzeinheit, insbesondere geeignet für einen gewerblichen Einsatz, umfassend mindestens eine Wachstumseinheit (1) zur Aufzucht von Pflanzen bzw. Pflanzgut und mindestens eine, mit der Wachstumseinheit (1) verbindbare, Handlingeinheit (2) zur Aufnahme der Infrastruktur zum Betrieb der Pflanzeinheit.

2. Pflanzeinheit nach Anspruch 1, **dadurch gekennzeichnet, dass** Wachstumseinheit (1) und Handlingeinheit (2) je eine Öffnung in Form eines Ausschnitts (19) an einer Kopplungsstelle aufweisen.

3. Pflanzeinheit nach Anspruch 1 oder 2, **dadurch gekennzeichnet, dass** bevorzugt zwei Wachstumseinheiten (1) und besonders bevorzugt in Form von Standardcontainern übereinander oder nacheinander angeordnet sind, wobei ein Ausschnitt (20) an einer Kopplungsstelle vorgesehen ist.

4. Pflanzeinheit nach einem der Ansprüche 1 bis 3, **dadurch gekennzeichnet, dass** die Handlingeinheit (2) der mindestens einen Wachstumseinheit (1) vorangestellt ist und bevorzugt aus zwei Standardcontainern für das Handling und die Pflege des Pflanzguts und für die zum Unterhalt der Pflanzeinheit erforderliche Technik gebildet ist.

5. Pflanzeinheit nach Anspruch 3, **dadurch gekennzeichnet, dass** durch die Wachstumseinheit (1) bodennah ein Pflanzenlift (4) geführt ist, der sich über die gesamte Höhe der Wachstumseinheit (1) und Handlingeinheit (2) erstreckt

6. Pflanzeinheit nach einem der Ansprüche 1 bis 5, **dadurch gekennzeichnet, dass** sich auf beiden Seiten des Pflanzenlifts (4) Laufschienen (5) erstrecken, die zudem mit Leuchtmitteln zur Beleuchtung der Pflanzen versehen sind.

7. Pflanzeinheit nach Anspruch 5, **dadurch gekennzeichnet, dass** in die Laufschienen (5) Trägerschlitten (6) für Pflanzbehälter einsetzbar sind.

8. Pflanzeinheit nach Anspruch 7, **dadurch gekennzeichnet, dass** der Pflanzenlift (4) Mittel zur, bevorzugt gleichzeitigen, Bewässerung aller Pflanzbehälter aufweist.

9. Pflanzeinheit nach einem der Ansprüche 5 bis 8, **dadurch gekennzeichnet, dass** im unteren Bereich des Pflanzenlifts (4) eine Fördereinheit, bevorzugt ein Förderband (7) zum Transport der Trägerschlitten (6) angeordnet ist.

10. Wachstumseinheit einer Pflanzeinheit zur Aufzucht von Pflanzen bzw. Pflanzgut, **dadurch gekennzeichnet, dass** sie aus mindestens einem Standard-Frachtcontainer gebildet ist.

11. Wachstumseinheit nach Anspruch 10, **dadurch gekennzeichnet, dass** sie mehrere Container umfasst, die zum Aufbau eines modularen Systems geeignet sind.

12. Handlingeinheit einer Pflanzeinheit zur Aufzucht von Pflanzen bzw. Pflanzgut, **dadurch gekennzeichnet, dass** sie aus zwei Standard-Frachtcontainern für das Handling und die Pflege des Pflanzguts und für die zum Unterhalt der Pflanzeinheit erforderlichen Technik gebildet ist.

13. Handlingeinheit nach Anspruch 12, **dadurch gekennzeichnet, dass** sie einer Wachstumseinheit (1) vorangestellt ist.
